# EUROPÄISCHE PATENTSCHRIFT

(11) **EP 0 477 638 B1**
(45) Veröffentlichungstag und Bekanntmachung des Hinweises auf die Patenterteilung: **28.12.1994**
(21) Anmeldenummer: 91115185.0
(22) Anmeldetag: 09.09.1991
(51) Int. Cl.: C08K 5/00, C08K 5/01, C08K 5/521, C08K 5/12, C08G 18/00, C08L 63/00

(54) **Reaktivsysteme und ein Verfahren zur Herstellung von Polyurethankunststoffen**
Reactive systems and process for the preparation of polyurethane resins
Systèmes réactifs et procédé de préparation de matières synthétiques de polyuréthane

(30) Priorität: 21.09.1990 DE 4029888
(43) Veröffentlichungstag der Anmeldung: 01.04.1992
(73) Patentinhaber: BAYER AG, 51368 Leverkusen (DE)
(72) Erfinder: Müller, Hanns Peter, Dr., W-5060 Bergisch Gladbach (DE); Franke, Joachim, Dr., W-5000 Köln 80 (DE); Bulan, Renate, Dipl.-Ing., W-4018 Langenfeld (DE)

(56) Entgegenhaltungen:
- EP-A- 0 331 996
- EP-A- 0 368 031

## Beschreibung

Die vorliegende Erfindung betrifft neue Reaktivsysteme, bestehend aus einer speziellen Polyisocyanatkomponente und einer Reaktivkomponente für diese Polyisocyanatkomponente, sowie nicht reaktive Weichmacher und gegebenenfalls weitere Hilfs- und Zusatzstoffe, und ein Verfahren zur Herstellung von Isocyanuratgruppen aufweisenden Polyurethankunststoffen unter Verwendung dieses Reaktivsystems.

Die Erfindung betrifft weiterhin neue Reaktivsysteme, die nach Härtung zwei- bzw. multi-phasige Formkörper mit guter Zähigkeit, Steifigkeit und Wärmebeständigkeit ergeben.

Die Herstellung von Isocyanuratgruppen aufweisenden Kunststoffen ist seit Jahren bekannt und wird in vielfältiger Form technisch genutzt. So beschreibt beispielsweise die DE-OS 2 534 247 ein Verfahren zur Herstellung von Formteilen auf Basis von isocyanuratmodifizierten Polyurethanen unter Verwendung von stark basischen Verbindungen wie beispielsweise Alkaliacetaten oder Alkaliphenolaten als Trimerisierungskatalysatoren.

Reaktivsysteme, die auf der Basis von Epoxid/Isocyanat (EPIC) Komponenten beruhen sind in einer älteren eigenen Anmeldung gemäß EP-A-068 031 beschrieben.

EPIC-Kunststoffe weisen gute Verarbeitungs- und Härtungseigenschaften auf, beim Aushärten ergeben sie Formkörper mit guter mechanischer Festigkeit, Chemikalienbeständigkeit und hohen Glasübergangstemperaturen, jedoch verhältnismäßig großer Sprödigkeit. Ähnliches gilt auch für Epoxidharze.

Der Erfindung lag also die Aufgabe zugrunde, EPIC-Harze zu entwickeln, die beim Aushärten Formkörper mit verbesserter Zähigkeit ergeben, die als 2K-Werkstoffe verarbeitbar sind, bei deren Dosierung kaum Mischungsfehler entstehen und die ohne merkliche Schwindung aushärten.

Es wurde nun überraschenderweise gefunden, daß diese Aufgaben durch die erfindungsgemäßen Reaktivsysteme gelöst werden.

Dieses Phänomen ist derartig überraschend und war für den Fachmann nicht vorhersehbar, daß ausgerechnet Weichmacher nach der Härtung Formkörper mit guter Zähigkeit bei gleichzeitig hoher Steifigkeit ergeben. Für den Anwender ist wesentlich, daß bei der erfindungsgemäßen Ausführungsform Mischungsfehler der bei beiden Komponenten in weiten Grenzen ausgeglichen werden.

Gegenstand der vorliegenden Erfindung sind daher Reaktivsysteme bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) einer NCO-reaktiven Komponente, bestehend aus mindestens einer organischen Verbindung des Molekulargewichtsbereichs 62 bis 12 000 mit mindestens zwei gegenüber Isocyanatgruppen im Sinne einer Additionsreaktion reaktionsfähigen Gruppen mit der Maßgabe, daß mindestens 10 Gew.-% der Komponente b) aus Verbindungen besteht, die pro 100 g mindestens 0,05 Mol tertiären Aminstickstoff enthalten
c) Weichmacher mit der Maßgabe, daß mindestens einer der Weichmacher im ausgehärteten Zustand ein Zwei(Multi)-Phasensystem ausbildet und in einer Menge von maximal 200 Gew.-%, bezogen auf das Reaktivharz eingesetzt wird und ausgewählt ist aus folgenden Verbindungen: (Iso) Alkylbenzole, Nonylanisole, Stearinsäurealkylester, Alkylsulfonsäureester und langkettige Alkylacetate; und gegebenenfalls
d) weiteren Hilfs- und Zusatzstoffen wobei die Menge der Komponente b) so gewählt wird, daß auf jede Isocyanatgruppe der Komponente a) 0,1 bis 0,95 gegenüber Isocyanatgruppen reaktionsfähige Gruppen der Komponente b) entfallen.

Gegenstand der Erfindung ist auch ein Verfahren zur Herstellung von gegebenenfalls geschäumten Isocyanuratgruppen aufweisenden Polyurethankunststoffen, dadurch gekennzeichnet, daß man ein Reaktivsystem bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) einer NCO-reaktiven Komponente, bestehend aus mindestens einer organischen Verbindung des Molekulargewichtsbereichs 62 bis 12 000 mit mindestens zwei gegenüber Isocyanatgruppen im Sinne einer Additionsreaktion reaktionsfählgen Gruppen mit der Maßgabe, daß mindestens 10 Gew.-% der Komponente b) aus Verbindungen besteht, die pro 100 g mindestens 0,05 Mol tertiären Aminstickstoff enthalten
c) Weichmacher mit der Maßgabe, daß mindestens einer der Weichmacher im ausgehärteten Zustand ein Zwei(Multi)-Phasensystem ausbildet und in einer Menge von maximal 200 Gew.-%, bezogen auf das Reaktivharz eingesetzt wird und ausgewählt ist aus folgenden Verbindungen: (Iso) Alkylbenzole, Nonylanisole, Stearinsäurealkylester, Alkylsulfonsäureester und langkettige Alkylacetate; und gegebenenfalls
d) weiteren Hilfs- und Zusatzstoffen wobei die Menge der Komponente b) so gewählt wird, daß auf jede Isocyanatgruppe der Komponente a) 0,1 bis 0,95 gegenüber Isocyanatgruppen reaktionsfähige Gruppen der Komponente b) entfallen, durch Abmischung der Einzelkomponenten herstellt und anschließend, gegebenenfalls unter Formgebung, durch Wärmezufuhr und/oder unter Ausnutzung der Reaktionswärme der sofort ablaufenden Polyurethanbildungsreaktion auf mindestens 60°C erwärmt und die Aushärtumg unter Trimerisierung eines Teils der im Ausgangsgemisch vorliegenden Isocyanatgruppen zu Ende führt.

In einer bevorzugten Auführungsform ist die Komponente a) in Gegenwart eines tertiären Amins als Katalysator zu einem Oxazolidinon- und Isocyanuratgruppen aufweisenden, höherviskosen Zwischenprodukt umgesetzt und die Reaktion bei einer Umsetzung von maximal 65 % der im Ausgangsgemisch vorliegenden Isocyanatgruppen durch Zugabe einer der Aminmenge mindestens äquivalenten Menge des alkylisch wirkenden Sulfonsäurealkylesters, von Methyliodid oder von Dimethylsulfat abgebrochen. Das so erhaltene, noch flüssige Zwischenprodukt wird dann mit den Komponenten b) c) und gegebenenfalls d) zur Reaktion gebracht.

Bei der Komponente a) der erfindungsgemäßen Reaktivsysteme handelt es sich um Gemische aus (i) einer Polyisocyanatkomponente und (ii) einer Epoxid-Komponente, wobei letztere durch eine Wärmebehandlung in Gegenwart eines Alkylierungsmittels so stabilisiert ist, daß eine spontane Reaktion zwischen den Isocyanatgruppen und den Epoxidgruppen, beispielsweise im Sinne der US-PS 4 766 158, unterbleibt.

Die Polyisocyanatkomponente (i) besteht aus mindestens einem organischen Polyisocyanat der aus der Polyurethanchemie an sich bekannten Art. In Betracht kommen beispielsweise Hexamethylendiisocyanat, die isomeren Xylylendiisocyanate, 4,4'-Diisocyanato-dicyclohexylmethan, 2,4- und/oder 2,6-Diisocyanatotoluol, 4,4' -Diisocyanatodiphenylmethan, dessen Gemische mit 2,4'-Diisocyanatodiphenylmethan und gegebenenfalls geringen Mengen 2,2'-Diisocyanatodiphenylmethan und/oder mit seinen höheren Homologen. Derartige Gemische entstehen bekanntlich bei der an sich bekannten Phosgenierung von Anilin-Formaldehyd-Kondensaten. Ferner in Betracht kommen Urethan- und/oder Carbodiimid- und/oder Uretdion- und/oder Isocyanurat- und/oder Biuret-modifizierte Derivate dieser Polyisocyanate. Vorzugsweise handelt es sich bei der Polyisocyanatkomponente (i) um mindestens ein aromatisches Polyisocyanat. Besonders gut geeignet sind bei Raumtemperatur flüssige Polyisocyanate oder Polyisocyanatgemische der Diphenylmethanreihe oder bei Raumtemperatur flüssige Derivate dieser Polyisocyanate bzw. Polyisocyanatgemische. Die Polyisocyanatkomponente (i) weist im allgemeinen einen NCO-Gehalt von 15 bis 50 Gew.-%, vorzugsweise von 22 bis 32 Gew.-% auf.

Bei der Epoxid-Komponente (ii) handelt es sich um mindestens ein organisches Epoxid, d.h. vorzugsweise um mindestens eine organische Verbindung die pro Molekül 1 bis 4, insbesondere 1 bis 2 Epoxidgruppen bei einem Epoxidäquivalentgewicht von 70 bis 500, vorzugsweise 170 bis 220 aufweist. Geeignet sind Monoepoxide wie beispielsweise Phenoxypropylenoxid, Styroloxid oder Glycidalkohol oder höherfunktionelle Polyepoxide wie beispielsweise Polyglycidylether mehrwertiger Phenole, insbesondere von Bisphenol A; Polyepoxidverbindungen auf der Basis von aromatischen Aminen, insbesondere Bis (N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsäureanhydrid und einem Mol 1,1,1-Trimethylolpropan, 3,4-Epoxycyclohexylmethan-3,4-epoxycyclohexancarboxylat.

Die Epoxide (ii) liegen in den erfindungsgemäßen Komponenten a) in bezüglich ihrer Reaktivität gegenüber Isocyanatgruppen inhibierter, d.h. in stabilisierter Form vor. Diese Stabilisierung der Epoxide erfolgt mittels einer Wärmebehandlung bei 30 bis 150°C, vorzugsweise 80 bis 130°C in Gegenwart eines Alkylierungsmittels, welches im allgemeinen in einer Menge von 0,005 bis 1 Gew.-%, vorzugsweise 0,05 bis 0,25 Gew.-%, bezogen auf das Gewicht des Epoxids, eingesetzt wird. Die Wärmebehandlung erfolgt im allgemeinen während eines Zeitraums von 15 bis 60 Minuten und kann sowohl in Abwesenheit der Polyisocyanatkomponente (i) als auch in Gegenwart zumindest eines Teils dieser Komponente stattfinden. Dies bedeutet, daß die Zugabe des Alkylierungsmittels und auch die anschließende Wärmebehandlung sowohl vor der Vereinigung des Epoxids mit dem Polyisocyanat als auch nach erfolgter Abmischung des Epoxids mit zumindest einem Teil des Polyisocyanats stattfinden können.

Geeignete Alkylierungsmittel sind beispielsweise Methyliodid, Dimethylsulfat oder vorzugsweise Sulfonsäurealkylester des Molekulargewichtsbereichs 110 bis 250 mit 1 bis 4 Kohlenstoffatomen im Alkylrest. Hierzu gehören sowohl aliphatische Sulfonsäurealkylester wie n-Butansulfonsäuremethylester, n-Perfluorbutansulfonsäuremethylester, n-Hexansulfonsäureethylester als auch aromatische Sulfonsäurealkylester wie Benzolsulfonsäuremethylester, -ethylester oder -n-butylester, p-Toluolsulfonsäuremethylester, -ethylester oder -m-butylester, 1-Naphthalinsulfonsäuremethylester, 3-Nitrobenzolsulfonsäure-methylester oder 2-Naphthalinsulfonsäuremethylester. Die beispielhaft genannten aromatischen Sulfonsäureester sind bevorzugt. Besonders bevorzugt wird p-Toluolsulfonsäuremethylester verwendet.

Im übrigen liegen in der Komponente a) die Epoxide (ii) in einer solchen Menge vor, daß auf 100 g der Komponente a) 0,005 bis 0,15, vorzugsweise 0,01 bis 0,05 Mol Epoxidgruppen entfallen.

Bei der Komponente b) der erfindungsgemäßen Systeme handelt es sich um mindestens eine organische Verbindung des Molekulargewichtsbereichs 62 bis 12 000, vorzugsweise 62 bis 6000 mit 2 bis 8, vorzugsweise 2 bis 4 gegenüber Isocyanatgruppen reaktionsfähigen Gruppen, vorzugsweise aromatischen primären Aminogruppen oder Hydroxylgruppen, besonders bevorzugt aliphatischen Hydroxylgruppen, mit der Maßgabe, daß mindestens 10 Gew.-% der Komponente b) aus Verbindungen besteht, die pro 100 g mindestens 0,05 Mol tertiären Aminstickstoff enthalten.

Als Komponente b) oder Teil der Komponente b) eignen sich sowohl niedermolekulare mehrwertige Alkohole (Molekulargewichtsbereich 62 bis 400) wie Ethylenglykol, Diethylenglykol, 1,4-Dihydroxybutan, 1,6-Dihydroxyhexan, Trimethylolpropan, Glycerin, Pentaerythrit, Sorbit oder Saccharose, als auch höhermolekulare Polyhydroxylverbindungen (Molekulargewichtsbereich 400 bis 12 000, vorzugsweise 400 bis 6000) wie beispielsweise Polyhydroxypolyether der aus der Polyurethanchemie an sich bekannten Art wie sie durch Alkoxylierung von geeigneten Startermolekülen wie den beispielhaft genannten mehrwertigen Alkoholen oder auch von Ammoniak oder Aminen wie Ethylendiamin, Hexamethylendiamin, 2,4-Diaminotoluol, Anilin, oder Aminoalkoholen wie Methyl-diethanol-amin oder Triethanolamin unter Verwendung von Propylenoxid und/oder Ethylenoxid in beliebiger Reihenfolge dieser Alkylenoxide in an sich bekannter Weise zugänglich sind. Ferner geeignet sind Polyesterpolyole, wie sie durch Umsetzung der beispielhaft genannten niedermolekularen Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind.

Ebenfalls geeignet, aber weniger bevorzugt, sind solche höhermolekularen Polyhydroxypolyether, in denen hochmolekulare Polykondensate oder Polymerisate in feindisperser, gelöster oder aufgepfropfter Form vorliegen. Derartige modifizierte Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen läßt. Derartige Verfahren sind beispielsweise in DE-AS 1 168 075 und 1 260 142, sowie DE-OS 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäß US-PS 3 869 413 bzw. DE-OS 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-Patentschriften 3 383 351, 3 304 273, 3 523 093, 3 110 695; DE-Auslegeschriften 1 152 536) oder Polycarbonatpolyolen (DE-Patentschrift 1 769 795; US-Patentschrift 3 637 909) erhalten werden, sind für das erfindungsgemäße Verfahren als Komponente b) geeignet. Bei Verwendung von Polyetherpolyolen, welche gemäß DE-OS 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten erfindungsgemäß als Verbindungen b) zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z.B. auf den Seiten 45-71, beschrieben.

Ferner als Komponente b) bzw. als Teil der Komponente b) geeignet sind endständige aromatische primäre Aminogruppen aufweisende Polyetherpolyamine wie sie beispielsweise gemäß den in EP-A-79 536, DE-OS 2 948 419, DE-OS 2 019 432, DE-OS 2 619 840, US-PS 3 808 250, US-PS 3 975 426 oder US-PS 4 016 143 beschriebenen Verfahren zugänglich sind.

Im übrigen kann die Komponente b), den oben gemachten Ausführungen entsprechend, auch niedermolekulare aromatische Diamine als Abmischkomponente enthalten. Bevorzugt sind dabei aromatische Diamine wie 1,4-Diaminobenzol, 2,4-Diaminotoluol, 2,4'- und/oder 4,4' -Diaminodiphenylmethan oder vorzugsweise solche Diamine die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppen zwei Alkylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und gegebenenfalls in weiteren ortho-Stellungen zu den Aminogruppen Methylsubstituenten aufweisen. Zu diesen bevorzugten bzw. besonders bevorzugten Diaminen gehören 2,4-Diaminomesytylen, 1,3,5-Triethyl-2,4-diaminobenzol, 1,3,5-Triisopropyl-2,4-diaminobenzol, 1-Methyl-3,5-diethyl-2,4-diaminobenzol, dessen technischen Gemische mit 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan. Beliebige Gemische derartiger aromatischer Diamine können ebenfalls eingesetzt werden.

Besonders bevorzugt besteht die Komponente b) jedoch ausschließlich aus Polyolen der beispielhaft genannten Art des Molekulargewichtsbereichs 62 bis 6000 und einer Hydroxylfunktionalität von 2 bis 4 und einem OH-Zahl-Bereich von 1806 bis 28.

Die Komponente b) liegt in den erfindungsgemäßen Systemen in einer solchen Menge vor, daß auf jede Isocyanatgruppe der Komponente a) 0,1 bis 0,95 gegenüber Isocyanatgruppen reaktionsfähige Gruppen der Komponente b) entfallen.

Bei der Komponente c) handelt es sich um in der Kunststofftechnik üblicherweise eingesetzte Weichmacher c1) mit der Maßgabe, daß mindestens einer der (nicht reaktiven) Weichmacher im ausgehärteten Zustand ein ein Zwei- bzw. Multi-Phasensystem ausbildet und aus der Gruppe c2) ausgewählt ist.

Geeignete übliche Weichmacher c1) sind beispielsweise Triethylphosphat, Diethylphthalat, Dibutylphthalat, Triacetin, Triocylphosphat, Trichlorethylphoshat.

Während als erfindungswesentliche Weichmacher c2) (Iso)Alkylbenzole, beispielsweise Marlican, Isododecylbenzol, sowie Nonylanisole, Stearinsäurealkylester, Alkylsulfonsäureester und langkettige Alkylacetate verwendet werden.

Die Mitverwendung von Weichmachern c2) ist erfindungswesentlich, da gerade diese Art von Verbindungen nach Vermischen der erfindungsgemäßen Reaktivsysteme zunächst homogene Mischungen aufweisen; im Verlaufe der Polyadditionsreaktion werden diese Verbindungen aber wieder kolloidal im Netzwerk abgeschieden und ergeben Formkörper mit den beschriebenen vorzüglichen Eigenschaften.

Zu den gegebenenfalls als mitzuverwendenden Hilfs- und Zusatzstoffen d) gehören tertiäre Amine als zusätzliche Katalysatoren, ebenso wie beispielsweise Treibmittel, oberflächenaktive Substanzen, Schaumstabilisatoren, Antiabsetzmittel bei der zusätzlichen Verwendung von Füllstoffen sowie interne Formtrennmittel.

Geeignete Treibmittel sind beispielsweise Wasser, Methylenchlorid, Monofluortrichlormethan, Dichlordifluormethan, Chlordifluormethan oder auch inerte Gase wie beispielsweise Stickstoff, Luft oder Kohlendioxid. Bei Verwendung von derartigen inerten Gasen erfolgt die "Gasbeladung" des Reaktionsgemisches dergestalt, daß man dem Gemisch aus den Komponenten b) bis d) mittels einer Venturidüse oder mittels eines Hohlrührers (gemäß DE-OS 3 244 037) das Gas in einer Menge von im allgemeinen von mindestens 10 Vol.-%, vorzugsweise im allgemeinen von mindestens 20 Vol.-% (bezogen auf Normaldruck) einverleibt.

Als oberflächenaktive Substanzen kommen Verbindungen in Betracht, welche zur Unterstützung der Homogenisierung der Ausgangsstoffe dienen. Genannt seien beispielsweise die Natriumsalze von Fettsäuren sowie Salze von Fettsäuren mit Aminen, z.B. ölsaures Diethylamin oder stearinsaures Diethanolamin.

Als Schaumstabilisatoren kommen vor allem wasserlösliche Polyethersiloxane in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-PS 2 764 565 beschrieben.

Die Menge der gegebenenfalls mitzuverwendenden Treibmittel, oberflächenaktiven Substanzen und Schaumstabilisatoren liegt im allgemeinen unterhalb 15, vorzugsweise bei maximal 10 Gew.-%, bezogen auf das Gesamtgewicht der Komponenten a) bis c).

Zu den gegebenenfalls mitzuverwendenden Hilfsmittel d) gehören auch die an sich bekannten inneren Formtrennmittel, wie sie beispielsweise in DE-OS 1 953 637 (= US-PS 3 726 952), DE-OS 2 121 670 (= GB-PS 1 365 215), DE-OS 2 431 968 (= US-PS 4 098 731) bzw. in DE-OS 2 404 310 (= US-PS 4 058 492) beschrieben sind. Bevorzugte Trennmittel sind die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse.

Besonders bevorzugt sind das Ölsäure- oder Tallölfettsäuresalz des amidgruppenhaltigen Amins, das durch Umsetzung von N-Dimethylaminopropylamin mit Ölsäure oder Tallölfettsäure erhalten worden ist bzw. das Salz aus 2 Mol Ölsäure und 1 Mol 1,4-Diaza-bicyclo-(2,2,2)-octan.

Neben diesen beispielhaft genannten, bevorzugt einzusetzenden Trennmitteln können prinzipiell beim erfindungsgemäßen Verfahren auch andere an sich bekannte Trennmittel des Standes der Technik allein oder im Gemisch mit den bevorzugten, beispielhaft genannen Trennmitteln eingesetzt werden. Zu diesen weiterhin geeigneten Trennmitteln gehören beispielsweise die Umsetzungsprodukte aus Fettsäureestern und Polyisocyanaten gemäß DE-AS 2 307 589, die Umsetzungsprodukte aus reaktionsfähige Wasserstoffatome aufweisenden Polysiloxanen mit Mono- und/oder Polyisocyanaten gemäß DE-OS 2 356 692 (= US-PS 4 033 912), Ester von Hydroxymethylgruppen aufweisenden Polysiloxanen mit Mono- und/oder Polycarbonsäuren gemäß DE-OS 2 363 452 (= US-PS 4 024 090) und Salze aus Aminogruppen enthaltenden Polysiloxanen und Fettsäuren gemäß DE-OS 2 427 273 oder DE-OS 2 431 968 (US-PS 4 098 731).

Die genannten internen Formtrennmittel werden, falls überhaupt, in einer Menge von insgesamt bis zu 10 Gew.-%, vorzugsweise bis zu 6 Gew.-%, bezogen auf das gesamte Reaktionsgemisch, eingesetzt.

Weitere, gegebenenfalls mitzuverwendende Zusatzstoffe d) sind beispielsweise Füllstoffe, wasserabsorbierende Mittel wie Zeolithe, Farbstoffe, Pigmente und Flammschutzmittel.

Als Füllstoffe, insbesondere verstärkend wirkende Füllstoffe, seien beispielhaft genannt: silikatische Mineralien, beispielsweise Schichtsilikate wie Antigorit, Serpentin, Hornblenden, Amphibile, Chrisotil, Talkum; Metalloxide wie Kaolin, Aluminiumoxide, Titanoxide und Eisenoxide, Metallsalze wie Kreide, Schwerspat und anorganische Pigmente, wie Phthalocyanin-Komplex sowie Glasmehl u.a.. Vorzugsweise verwendet werden natürliche und synthetische faserförmige Materialien wie Keuflar, C-Faser, Wollastonit und insbesondere Glasfasern verschiedener Länge, die gegebenenfalls geschlichtet sein können.

Füllstoffe können einzeln oder als Gemisch verwendet werden. Hierbei kann eine zusätzlicce Verwendung von Antiabsetzmitteln vorteilhaft sein.

Die Füllstoffe werden, falls überhaupt, der Reaktionsmischung vorteilhafterweise in Mengen von bis zu 70 Gew.-%, vorzugsweise bis zu 30 Gew.-%, bezogen auf das Gewicht der Komponenten a) bis c), zugegeben.

Geeignete Flammschutzmittel sind beispielsweise Trikresylphosphat, Tris-2-chlorethylphosphat, Tris-chlorpropylphosphat, Tris-2,3-dibrompropylphosphat und Triphenylphosphat.

Außer den bereits genannten halogensubstituierten Phosphaten können auch anorganische Flammschutzmittel wie Aluminiumoxidhydrat, Ammoniumpolyphosphat und Calciumsulfat verwendet werden. Im allgemeinen hat es sich als zweckmäßig erwiesen, bis zu 25 Gew.-% der genannten Flammschutzmittel, bezogen auf die Summe der Komponenten a) bis d) zu verwenden.

Nähere Angaben über die üblichen Hilfs- und Zusatzstoffe sind der Fachliteratur, beispielsweise der Monographie von J.H. Saunders und K.C. Frisch "High Polymers" Band XVI, Polyurethanes, Teil 2 und, Verlag Interscience Publishers 1962 bzw. 1964, zu entnehmen.

Zur Herstellung der erfindungsgemäßen Reaktivsysteme werden die Komponenten a) bis d) bei einer unterhalb 60°C, vorzugsweise unter 40°C liegenden Temperatur miteinander vermischt. Hierbei ist es im Falle von langsam reagierenden Gemischen möglich, alle Einzelkomponenten mit Hand zu vermischen und diese Mischung anschließend zu vergießen. Bevorzugt ist jedoch eine Arbeitsweise, bei welcher man die Polyisocyanatkomponente a) mit einem vorab hergestellten Gemisch der Polyolkomponente b) mit der Weichmachermischung c) vermischt, wobei die gegebenenfalls mitverwendeten Hilfs- und Zusatzstoffe d) sowohl der Komponente a) als auch dem Gemisch der Komponenten b) und c) zugemischt werden können (falls sie mit dem jeweiligen Komponenten verträglich sind) oder auch separat dem Gemisch zudosiert werden können.

Der Klärpunkt der füllstofffreien Mischungen ist in der Regel sofort nach Vermischen erreicht. Erst nach Überschreiten der Temperatur von ca. 60°C aufgrund der Reaktionswärme und/oder durch Beheizen des Systems erfolgt eine deutliche Beschleunigung der Verfestigungsreaktion und es tritt Zweiphasigkeit auf. Die erfindungsgemäßen Systeme eignen sich daher insbesondere zur Herstellung von Formkörpern, wobei die Tropf-und Gießzeit dem jeweiligen Anwendungsgebiet angepaßt werden kann. Durch die zunächst ablaufende Polyurethanbildung und anschließende Trimerisierung der überschüssigen NCO-Gruppen können vom Anwender kaum Einwiegefehler gemacht werden.

Die erfindungsgemäßen Reaktivsysteme können nach dem erfindungsgemäßen Verfahren zu massiven oder auch geschäumten Gießkörpern oder Formteilen verarbeitet werden. Isolierstege für Fensterprofile, Rollen, Walzen, Kegelkugeln, Kegel, Filterplatten, Gehäuse, Paletten sind Beispiele für mögliche Anwendungen der resultierenden Materialien. Da problemlos sehr große Wandstärken realisiert werden können, bieten sich diese Materialien auch zur Herstellung dicker Platten an. Die Herstellung von Modellen z. B. im Bereich von Dentallabors, als Abformmassen, Dubliersmassen oder auch als Gipsersatz ist ebenso möglich, wie die Herstellung von Verbundwerkstoffen. Die erfindungsgemäßen Harze sind als Imprägnier-, Gieß- und Laminierharze sowie als Formmassen (gefüllt oder ungefüllt) einsetzbar.

Dienen sie zur Herstellung von Verbundwerkstoffen, so erfolgt die Tränkung von Glas-, Kohlenstoff- oder Aramidfasern unter Bildung von Pregregs.

Der Gegenstand der Erfindung soll anhand der folgenden Beispiele noch näher erläutert werden.

### Beispiel 1

120 Gew.-Teile eines Gemischs aus 60 % 2,4'-Diisocyanatodiphenylmethan und 40 % 4,4'-Diisocyanatodiphenylmethan (NCO-Gehalt = 33,6 %) (MDI) werden mit 30 Gew.-Teilen des Diglycidethers von Bisphenol A (Epoxidzahl = 0,5) und 1,5 ml einer separat hergestellten 1 M Lösung von p-Toluolsulfonsäuremethylester in dem oben genannten Diisocyanatgemischs (MDI) gemischt und 30 min unter Stickstoff und Rühren auf 120°C erhitzt. Nach Abkühlen erhält man ein Reaktivharz mit folgenden Kenndaten:

| | |
|---|---|
| % NCO | = 26,2 (bezogen auf Gesamtgemisch) |
| Viskosität η_{25°} | = 55 mPa.s |

### Beispiel 2

800 Gew.-Teile eines Gemisches aus 60 % 2,4'-Diisocyanatodiphenylmethan und 40 % 4,4'-Diisocyanatodiphenylmethan (NCO-Gehalt = 33,6 %) werden bei 50°C mit 200 Gew.-Teilen des Diglycidylethers von Bisphenol A (Epoxidzahl = 0,585) und 0,1 ml Dimethylbenzylamin gemischt und anschließend auf 120°C aufgeheizt. Die leicht exotherme Reaktion zeigt den sofortigen Beginn der Isocyanuratbildung an. Nach 2 Std. Reaktionszeit ohne externe Heizung wird der Ansatz gekühlt. Dadurch stellt sich eine Innentemperatur vort ca. 90°C ein. Dem Ansatz wird eine Probe entnommene. Die Probe besitzt einen NCO-Gehalt von 23 % NCO. Durch Zugabe von 5 ml Stopperlösung ( = 15,4 Gew.-%ige Lösung von p-Toluolsulfonsäuremethylester in einem Gemisch aus 60 % 2,4'-Diisocyanatodiphenylmethan und 40 % 4,4'-Diisocyanatodiphenylmethan) wird die Reaktion abgebrochen. Anschließend rührt man den Ansatz weitere 30 min bei 120°C. Es ensteht ein bei 20°C flüssiges, klares, gelbes lagerstabiles Harz mit einer Viskosität bei 25°C von 2100 mPa.s und einem NCO-Gehalt von 21 %.

### Beispiel 3

Für die Herstellung einer Dubliermasse werden 100 g des Reaktivharzes aus Beispiel 1 als Komponente A mit 100 g Komponente B (Zusammensetzung siehe unten) vermischt.

Die von Hand verrührte Masse wird nach ca. 15 Sek. klar. Anschließend erwärmt sich das Gemisch, wird nach 185 Sek. dispers und nach 220 Sek. klebfrei. Die Verarbeitungszeit beträgt ca. 3 Min. Der NCO-Überschuß (Kennzahl 164) reagiert beim Nachheizen innerhalb von 16 Std. bei 120°C vollständig ab (Kontrolle über IR-Spektrum).

Die Masse hat folgende Eigenschaften:

| | |
|---|---|
| Glasübergangstemperatur | 123°C |
| Martensgrad | 77°C |
| Shore-Härte D | 79 |
| Schlagzähigkeit | 15 KJ/m² |
| Biegefestigkeit | 77 N/mm² |

### Zusammensetzung der Komponente B

35 Gew.-Teile eines Polyethers der OH-Zahl 630 (hergestellt aus Ethylendiamin und Propylenoxid),
15 Gew.-Teile Trichlorethylphosphat,
20 Gew.-Teile Trioctylphosphat,
30 Gew.-Teile Marlican (n-Dodecylbenzol),
3 Gew.-Teile Baylith-Phase (Trockenmittel) und
0,1 Gew.-Teile Byk 053 (Entschäumer)

### Beispiel 4

100 g des Reaktivharzes aus Beispiel 2 als Komponente A werden mit 100 g der Komponente B aus Beispiel 3 von Hand gerührt. Die Mischung wird nach 20 Sek. klar, anschließend exotherm, nach 150 Sek dispers und nach 240 Sek. klebfrei. Die Verarbeitungszeit beträgt ca. 140 Sekunden. Der NCO-Überschuß (Kennzahl 131) reagiert beim Nachheizen innerhalb von 16 Std. bei 120°C vollständig ab (Kontrolle über IR-Spektrum).

Die Masse hat folgende Eigenschaften:

| | |
|---|---|
| Glasübergangstemperatur | 122°C |
| Martensgrad | 62°C |
| Shore-Härte D | 79 |
| Schlagzähigkeit | 18 KJ/m² |
| Biegefestigkeit | 79 N/mm² |
| Randfaserdehnung | 5,29 % |
| E-Modul aus Biegeversuch | 1790 N/mm² |

### Beispiel 5

100 g des Reaktivharzes aus Beispiel 2 werden mit 100 g einer Mischung aus
35 Gew.-Teile eines Polyethers der, OH-Zahl 630 (hergestellt aus Ethylendiamin und Propylenoxid),
30 Gew.-Teile Marlican (n-Dodecylbenzol),
35 Gew.-Teile Dibutylphthalat und
0,3 Gew.-Teile Byk 053 (Entschäumer) von Hand verrührt.

Die Masse wird nach 20 Sek. klar, danach exotherm, nach 150 Sek. dispers und nach 210 Sek. klebfrei. Die Verarbeitungszeit beträgt 165 Sek.

### Beispiel 6

100 g des Reaktivharzes aus Beispiel 2 werden mit 100 g einer Mischung aus
55 Gew.-Teile eines Polyethers der OH-Zahl 470 (hergestellt aus Ethylendiamin und Propylenoxid),
30 Gew.-Teile Marlican (n-Dodecylbenzol) und
35 Gew.-Teile Diethylphthalat von Hand verrührt.

### Beispiel 7

100 g des Reaktivharzes aus Beispiel 2 werden mit 165 g einer Mischung aus
35 Gew.-Teile eines Polyethers der OH-Zahl 630 (hergestellt aus Ethylendiamin und Propylenoxid),
60 Gew.-Teile Marlican (n-Dodecylbenzol) und
70 Gew.-Teile Diethylphthalat von Hand verrührt.

Die Massen gemäß Beispielen 6 und 7 werden nach 25 Sek. klar, danach exotherm, nach 4 Min. dispers und nach 6 Min. klebfrei. Die Verarbeitungszeit beträgt 5 Min. Diese Beispiele zeigen, daß Dosierfehler weitgehend ausgeglichen werden.

### Beispiel 8 (Vergleichsbeispiel)

100 g des Reaktivharzes aus Beispiel 2 werden mit 165 g einer Mischung aus
35 Gew.-Teile eines Polyethers der OH-Zahl 630 (hergestellt aus Ethylendiamin und Propylenoxid),
130 Gew.-Teile Diethylphthalat von Hand verrührt.

Die Mischung wird nach 20 Sek. klar, anschließend exotherm, nach 7 Min. klebfrei. Die Verarbeitungszeit beträgt 4 1/2 Min. Die Masse bleibt klar, schwitzt aber beim Lagern aus und zeigt eine deutlich geringere Festigkeit als die Masse aus Beispiel 7.

## Patentansprüche

1. Reaktivsysteme bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen,
b) einer NCO-reaktiven Komponente, bestehend aus mindestens einer organischen Verbindung des Molekulargewichtsbereichs 62 bis 12 000 mit mindestens zwei gegenüber Isocyanatgruppen im Sinne einer Additionsreaktion reaktionsfähigen Gruppen mit der Maßgabe, daß mindestens 10 Gew.-% der Komponente b) aus Verbindungen besteht, die pro 100 g mindestens 0,05 Mol tertiären Aminstickstoff enthalten
c) Weichmacher mit der Maßgabe, daß mindestens einer der Weichmacher im ausgehärteten Zustand ein Zwei(Multi)-Phasensystem ausbildet und in einer Menge von maximal 200 Gew.-%, bezogen auf das Reaktivharz eingesetzt wird und ausgewählt ist aus folgenden Verbindungen: (Iso)Alkylbenzole, Nonylanisole, Stearinsäurealkylester, Alkylsulfonsäureester und langkettige Alkylacetate; und gegebenenfalls
d) weiteren Hilfs- und Zusatzstoffen wobei die Menge der Komponente b) so gewählt wird, daß auf jede Isocyanatgruppe der Komponente a) 0,1 bis 0,95 gegenüber Isocyanatgruppen reaktionsfähige Gruppen der Komponente b) entfallen.

2. Reaktivsysteme bestehend aus
a) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, die in Gegenwart eines tertiären Amins als Katalysator zu einem Oxazolidinon- und Isocyanuratgruppen aufweisenden, höherviskosen Zwischenprodukt umgesetzt sind und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters abgebrochen ist und wobei die Mengenverhältnisse der Komponenten (i) und (ii) so gewählt werden, daß in 100 g der Komponente a) 0,005 bis 0,4 Mol an Epoxidgruppen vorliegen,
b) einer NCO-reaktiven Komponente, bestehend aus mindestens einer organischen Verbindung des Molekulargewichtsbereichs 62 bis 12 000 mit mindestens zwei gegenüber Isocyanatgruppen im Sinne einer Additionsreaktion reaktionsfähigen Gruppen mit der Maßgabe, daß mindestens 10 Gew.-% der Komponente b) aus Verbindungen besteht, die pro 100 g mindestens 0,05 Mol tertiären Aminstickstoff enthalten
c) Weichmacher mit der Maßgabe, daß mindestens einer der Weichmacher im ausgehärteten Zustand ein Zwei(Multi)-Phasensystem ausbildet und in einer Menge von maximal 200 Gew,-%, bezogen auf das Reaktivharz eingesetzt wird und ausgewählt ist aus folgenden Verbindungen: (Iso)Alkylbenzole, Nonylanisole, Stearinsäurealkylester, Alkylsulfonsäureester und langkettige Alkylacetate; und gegebenenfalls
d) weiteren Hilfs- und Zusatzstoffen wobei die Menge der Komponente b) so gewählt wird, daß auf jede Isocyanatgruppe der Komponente a) 0,1 bis 0,95 gegenüber Isocyanatgruppen reaktionsfähige Gruppen der Komponente b) entfallen.

3. Reaktivsysteme gemäß einem der Ansprüche 1 oder 2, dadurch gekennzeichnet, daß die in der Komponente a) vorliegende Polyisocyanatkomponente (i) ein bei Raumtemperatur flüssiges Polyisocyanat oder Polyisocyanatgemisch der Diphenylmethanreihe oder ein bei Raumtemperatur flüssiges Derivat eines derartigen Polyisocyanats bzw. Polyisocyanatgemisches darstellt.

4. Reaktivsysteme gemäß einem der Ansprüche 1 bis 3, dadurch gekennzeichnet, daß die Komponente b) aus mindestens einer organischen Polyhydroxylverbindung mit einer Hydroxylfunktionalität von 2 bis 4 und einem Molekulargewicht von 62 bis 12.000 besteht und 0,5 bis 12 Gew.-% tertiären Stickstoff enthält.

5. Reaktivsysteme gemäß einem der Ansprüche 1 bis 4, dadurch gekennzeichnet, daß die Komponente c) mindestens einen Weichmacher auf Basis von (Iso)Alkyl-Benzolen, bevorzugt Marlican, enthält, und ansonsten die üblichen Weichmacher aus Basis von Phosphor und/oder Phthalsäureester und/oder Glycerinester und/oder Alkyl-Sulfonsäureester enthält.

6. Verfahren zur Herstellung von gegebenenfalls geschäumten Isocyanuratgruppen aufweisenden Polyurethankunststoffen, dadurch gekennzeichnet, daß man ein Reaktivsystem bestehend aus
a₁) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, wobei die Lagerstabilität durch eine, gegebenenfalls in Gegenwart von mindestens einem Teil der Polyisocyanatkomponente (i) durchgeführte, Wärmebehandlung der Epoxidkomponente (ii) in Gegenwart eines Alkylierungsmittels sichergestellt worden ist, und wobei die Mengenverhältnisse der Komponenten (i) und (ii) so gewählt werden, daß in 100 g der Komponente a) 0,005 bis 0,4 Mol an Epoxidgruppen vorliegen, oder
a₂) einer lagerstabilen Mischung aus (i) einer Polyisocyanatkomponente, bestehend aus mindestens einem organischen Polyisocyanat und (ii) einer Epoxidkomponente, bestehend aus mindestens einem organischen Epoxid, das in Gegenwart eines tertiären Amins als Katalysator zu einem Oxazolidinon- und Isocyanuratgruppen aufweisenden, höherviskosen Zwischenprodukt umgesetzt sind und die Reaktion bei einer Umsetzung von maximal 65 % der im Ausgangsgemisch vorliegenden Isocyanatgruppen durch Zugabe einer der Aminmenge mindestens äquivalenten Menge des alkylierend wirkenden Sulfonsäurealkylesters abgebrochen ist und wobei die Mengenverhältnisse der Komponenten (i) und (ii) so gewählt werden, daß in 100 g der Komponente a) 0,005 bis 0,4 Mol an Epoxidgruppen vorliegen,
b) einer NCO-reaktiven Komponente, bestehend aus mindestens einer organischen Verbindung des Molekulargewichtsbereichs 62 bis 12.000 mit mindestens zwei gegenüber Isocyanatgruppen im Sinne einer Additionsreaktion reaktionsfähigen Gruppen mit der Maßgabe, daß mindestens 10 Gew.-% der Komponente b) aus Verbindungen besteht, die pro 100 g mindestens 0,05 Mol tertiären Aminstickstoff enthalten und
c) Weichmacher mit der Maßgabe, daß mindestens einer der Weichmacher im ausgehärteten Zustand ein Zwei(Multi)-Phasensystem ausbildet und in einer Menge von maximal 200 Gew.-%, bezogen auf das Reaktivharz eingesetzt wird und ausgewählt ist aus folgenden Verbindungen: (Iso)Alkylbenzole, Nonylanisole, Stearinsäurealkylester, Alkylsulfonsäureester und langkettige Alkylacetate; und gegebenenfalls
d) weiteren Hilfs- und Zusatzstoffen wobei die Menge der Komponente b) so gewählt wird, daß auf jede Isocyanatgruppe der Komponente a) 0,1 bis 0,95 gegenüber Isocyanatgruppen reaktionsfähige Gruppen der Komponente b) entfallen, durch Abmischung der Einzelkomponenten herstellt und anschließend, gegebenenfalls unter Formgebung, durch Wärmezufuhr und/oder unter Ausnutzung der Reaktionswärme der sofort ablaufenden Polyurethanbildungsreaktion auf mindestens 60°C erwärmt und die Aushärtumg unter Trimerisierung eines Teils der im Ausgangsgemisch vorliegenden Isocyanatgruppen zu Ende führt.

7. Formmassen enthaltend eine wärmehärtbare Harzmischung nach Ansprüchen 1 bis 5.

## Claims

1. Reactive systems consisting of
a) a storable mixture of (i) a polyisocyanate component consisting of at least one organic polyisocyanate and (ii) an epoxide component consisting of at least one organic epoxide, stability in storage having been established by heat treatment of the epoxide component (ii) in the presence of an alkylating agent and optionally in the presence of at least part of the polyisocyanate component (i), the quantity ratios between components (i) and (ii) being selected so that 0.005 to 0.4 mol of epoxide groups are present in 100 g of component a),
b) an NCO-reactive component consisting of at least one organic compound with a molecular weight in the range from 62 to 12,000 and containing at least two groups reactive to isocyanate groups in an addition reaction, with the proviso that at least 10% by weight of component b) consists of compounds containing at least 0.05 mol of tertiary amine nitrogen per 100 g,
c) plasticizers with the proviso that at least one of the plasticizers in the cured state forms a two-(multi)-phase system, is used in a quantity of at most 200% by weight, based on the reactive resin, and is selected from the following compounds: isoalkylbenzenes, nonyl anisoles, stearic acid alkyl esters, alkylsulfonic acid esters and long-chain alkyl acetates; and optionally
d) other auxiliaries and additives, the quantity of component b) being selected so that, for every isocyanate group of component a), there are 0.1 to 0.95 isocyanate-reactive groups of component b).

2. Reactive systems consisting of
a) a storable mixture of (i) a polyisocyanate component consisting of at least one organic polyisocyanate and (ii) an epoxide component consisting of at least one organic epoxide which are reacted in the presence of a tertiary amine as catalyst to form a relatively high-viscosity intermediate product containing oxazolidinone and isocyanurate groups and the reaction is terminated at a conversion of at most 65% of the isocyanate groups present in the starting mixture by addition of the alkylating sulfonic acid alkyl ester in a quantity at least equivalent to the quantity of amine, the quantity ratios between components (i) and (ii) being selected so that 0.005 to 0.4 mol of epoxide groups are present in 100 g of component a),
b) an NCO-reactive component consisting of at least one organic compound with a molecular weight in the range from 62 to 12,000 containing at least two groups reactive to isocyanate groups in an addition reaction, with the proviso that at least 10% by weight of component b) consists of compounds containing at least 0.05 mol of tertiary amine nitrogen per 100 g,
c) plasticizers with the proviso that at least one of the plasticizers in the cured state forms a two-(multi)-phase system, is used in a quantity of at most 200% by weight, based on the reactive resin, and is selected from the following compounds: (iso)alkylbenzenes, nonyl anisoles, stearic acid alkyl esters, alkylsulfonic acid esters and long-chain alkyl acetates; and optionally
d) other auxiliaries and additives, the quantity of component b) being selected so that, for every isocyanate group of component a), there are 0.1 to 0.95 isocyanate-reactive groups of component b).

3. Reactive systems as claimed in claim 1 or 2, characterized in that the polyisocyanate component (i) present in component a) is a polyisocyanate or polyisocyanate mixture of the diphenylmethane series which is liquid at room temperature or a derivative of such a polyisocyanate or polyisocyanate mixture which is liquid at room temperature.

4. Reactive systems as claimed in any of claims 1 to 3, characterized in that component b) consists of at least one organic polyhydroxyl compound with a hydroxyl functionality of 2 to 4 and a molecular weight of 62 to 12,000 and contains 0.5 to 12% by weight of tertiary nitrogen.

5. Reactive systems as claimed in any of claims 1 to 4, characterized in that component c) contains at least one plasticizer based on (iso)alkylbenzenes, preferably Marlican, and otherwise contains conventional plasticizers based on phosphorus and/or phthalic acid esters and/or glycerol esters and/or alkylsulfonic acid esters.

6. A process for the production of optionally foamed polyurethane plastics containing isocyanurate groups, characterized in that a reactive system consisting of
a₁) a storable mixture of (i) a polyisocyanate component consisting of at least one organic polyisocyanate and (ii) an epoxide component consisting of at least one organic epoxide, stability in storage having been established by heat treatment of the epoxide component (ii) in the presence of an alkylating agent and optionally in the presence of at least part of the polyisocyanate component (i), the quantity ratios between components (i) and (ii) being selected so that 0.005 to 0.4 mol of epoxide groups are present in 100 g of component a),
a₂) a storable mixture of (i) a polyisocyanate component consisting of at least one organic polyisocyanate and (ii) an epoxide component consisting of at least one organic epoxide which are reacted in the presence of a tertiary amine as catalyst to form a relatively high-viscosity intermediate product containing oxazolidinone and isocyanurate groups and the reaction is terminated at a conversion of at most 65% of the isocyanate groups present in the starting mixture by addition of the alkylating sulfonic acid alkyl ester in a quantity at least equivalent to the quantity of amine, the quantity ratios between components (i) and (ii) being selected so that 0.005 to 0.4 mol of epoxide groups are present in 100 g of component a),
b) an NCO-reactive component consisting of at least one organic compound with a molecular weight in the range from 62 to 12,000 and containing at least two groups reactive to isocyanate groups in an addition reaction, with the proviso that at least 10% by weight of component b) consists of compounds containing at least 0.05 mol of tertiary amine nitrogen per 100 g,
c) plasticizers with the proviso that at least one of the plasticizers in the cured state forms a two-(multi)-phase system, is used in a quantity of at most 200% by weight, based on the reactive resin, and is selected from the following compounds: isoalkylbenzenes, nonyl anisoles, stearic acid alkyl esters, alkylsulfonic acid esters and long-chain alkyl acetates; and optionally
d) other auxiliaries and additives, the quantity of component b) being selected so that, for every isocyanate group of component a), there are 0.1 to 0.95 isocyanate-reactive groups of component b)
is prepared by mixing the individual components, the resulting mixture is heated to at least 60°C, optionally in moulds, by application of heat and/or by utilizing the heat of reaction of the polyurethane-forming reaction which takes place immediately and curing is completed by partial trimerization of the isocyanate groups present in the starting mixture.

7. Moulding compounds containing a heat-curing resin mixture according to claims 1 to 5.

## Revendications

1. Systèmes réactifs consistant en
(a) un mélange, stable au magasinage, de (i) un constituant polyisocyanate, consistant en au moins un polyisocyanate organique, et de (ii) un constituant époxyde, consistant en au moins un époxyde organique, la stabilité au magasinage ayant été assurée par un traitement de chauffage du constituant époxyde (ii), effectuée éventuellement en présence d'au moins une partie du constituant polyisocyanate (i), et effectuée en présence d'un agent d'alkylation, et le rapport entre les quantités des constituants (i) et (ii) étant choisi de manière qu'il y ait, dans 100 g de constituant (a), 0,005 à 0,4 mol de groupes époxydes,
(b) un constituant pouvant réagir avec les groupes NCO et consistant en au moins un composé organique dont le poids moléculaire se situe entre 62 et 12 000, comportant au moins deux groupes capables de réagir avec des groupes isocyanates dans le sens d'une réaction d'addition, à la condition qu'au moins 10 % en poids du constituant (b) consistent en des composés contenant, pour 100 g, au moins 0,05 moi d'azote de groupe amino tertiaire,
(c) un ou des plastifiants, à la condition qu'au moins l'un des plastifiants forme, à l'état durci, un système en deux ou plusieurs phases, et qui est ou sont présents en une quantité d'au maximum 200 % en poids, par rapport à la résine réactive, et qui sont choisis parmi les composés suivants : des (iso)alkylbenzènes, des nonylanisoles, des esters alkyliques de l'acide stéarique, des esters d'un acide alkylsulfonique et des acétates d'alkyles à longue chaîne, et éventuellement
(d) d'autres adjuvants et additifs, la quantité du constituant (b) étant choisie de manière que à chaque groupe isocyanate du constituant (a) corresponde 0,1 à 0,95 groupe du constituant (b) pouvant réagir avec des groupes isocyanates.

2. Systèmes réactifs consistant en
(a) un mélange, stable au magasinage, de (i) un constituant polyisocyanate consistant en au moins un polyisocyanate organique et (ii) un constituant époxyde, consistant en au moins un époxyde organique que l'on fait réagir en présence d'une amine tertiaire comme catalyseur pour obtenir un produit intermédiaire à plus haute viscosité, présentant des groupes oxazolidinones et/ou isocyanurates, et la réaction a été interrompue à un taux de réaction de 65 % au maximum des groupes isocyanates présents dans le mélange de départ, par addition d'une quantité, équivalant au moins à la quantité de l'amine, d'un ester alkylique d'acide sulfonique à rôle d'alkylation et les rapports entre les quantités des constituants (i) et (ii) ont été choisis de façon que, dans 100 g du constituant (a), il y ait 0,005 à 0,4 mol de groupes époxydes,
(b) un constituant pouvant réagir avec des groupes NCO et consistant en au moins un composé organique dont le poids moléculaire se situe entre 62 et 12 000 et qui comporte au moins deux groupes pouvant réagir avec des groupes isocyanates dans le sens d'une réaction d'addition, à la condition qu'au moins 10 % en poids du constituant (b) consistent en des composés contenant, pour 100 g, au moins 0,05 mol d'azote de groupe amino tertiaire,
(c) un ou des plastifiants, à condition qu'au moins l'un des plastifiants forme, à l'état durci, un système à deux ou plusieurs phases et qui est ou sont présents en une quantité d'au maximum 200 % en poids, par rapport à la résine réactive et qui est ou sont choisis parmi les composés suivants : des (iso)alkylbenzènes, des nonylanisoles, des esters alkyliques de l'acide stéarique, des esters d'acides alkylsulfoniques et des acétates d'alkyles à longue chaîne ; et éventuellement
(d) d'autres adjuvants et additifs, la quantité du constituant (b) étant choisie de façon qu'à chaque groupe isocyanate du constituant (a) corresponde 0,1 à 0,95 groupe, pouvant réagir avec des groupes isocyanates, du constituant (b).

3. Systèmes réactifs selon les revendications 1 ou 2, caractérisés en ce que le constituant polyisocyanate présent dans le constituant (a) représente un polyisocyanate ou un mélange de polyisocyanates liquide à la température ambiante, de la série du diphénylméthane ou un dérivé, liquide à la température ambiante, d'un tel polyisocyanate ou d'un tel mélange de polyisocyanates.

4. Systèmes réactifs selon l'une des revendications 1 à 3, caractérisés en ce que le constituant (b) consiste en au moins un composé polyhydroxylé organique présentant un nombre de groupes fonctionnels hydroxyles de 2 à 4 et ayant un poids moléculaire de 62 à 12 000, et contenant 0,5 à 12 % en poids d'azote tertiaire.

5. Systèmes réactifs selon l'une des revendications 1 à 4, caractérisés en ce que le constituant (c) contient au moins un plastifiant à base de (iso)alkylbenzène, de préférence du "Marlican", et le système contient par ailleurs les plastifiants usuels à base de phosphore et/ou d'un ester de l'acide phtalique et/ou d'un ester de glycérol et/ou d'un ester d'acide alkylsulfonique.

6. Procédé pour préparer des matières synthétiques ou plastiques du type polyuréthanne, éventuellement sous forme de mousse, et présentant des groupes isocyanurates, procédé caractérisé en ce qu'on prépare, par mélangeage des constituants individuels, un système réactif consistant en :
(a₁) un mélange, stable au magasinage de (i), un constituant polyisocyanate, consistant en au moins un polyisocyanate organique et (ii) un constituant époxyde, consistant en au moins un époxyde organique, la stabilité au magasinage étant assurée par un traitement de chauffage du constituant époxyde (ii), traitement effectué éventuellement en présence d'au moins une partie du constituant polyisocyanate (i) et effectué en présence d'un agent d'alkylation, et les rapports entre les quantités des constituants (i) et (ii) étant choisis de façon qu'il y ait dans 100 g de constituant (a) 0,005 à 0,4 mol de groupes époxydes, ou
(a₂) un mélange, stable au magasinage, de (i) un constituant polyisocyanate consistant en au moins un polyisocyanate organique, et (ii) un constituant époxyde, consistant en au moins un époxyde organique que l'on fait réagir en présence d'une amine tertiaire comme catalyseur pour obtenir un produit intermédiaire de plus grande viscosité, présentant des groupes oxazolidinones et isocyanurates, et l'on interrompt la réaction, à un taux de réaction de 65 % au maximum des groupes isocyanates présents dans le mélange de départ, par l'addition d'une quantité de l'ester alkylique d'acide sulfonique à rôle d'alkylation correspondant au moins à la quantité de l'amine, et l'on choisit les rapports entre les quantités des constituants (i) et (ii) de façon que, dans 100 g du constituant (a), il y ait 0,005 à 0,4 mol de groupes époxydes;
(b) un constituant pouvant réagir avec les groupes NCO et consistant en au moins un composé organique dont le poids moléculaire se situe entre 62 et 12 000 et qui comporte au moins deux groupes pouvant réagir avec des groupes isocyanates dans le sens d'une réaction d'addition, à la condition qu'au moins 10 % du constituant (b) consistent en des composés qui contiennent, pour 100 g au moins 0,05 mol d'azote de groupe amino tertiaire, et
(c) un ou des plastifiants, à la condition qu'au moins l'un des plastifiants forme, à l'état durci, un système à deux ou plusieurs phases et que l'on utilise en une quantité d'au maximum 200 % en poids, par rapport à la résine réactive et que l'on choisit parmi les composés suivants : des (iso)alkylbenzènes, des nonylanisoles, des esters alkyliques de l'acide stéarique, des esters d'acides alkylsulfoniques et des acétates d'alkyles à longue chaîne, et éventuellement
(d) d'autres adjuvants et additifs, la quantité du constituant (b) étant choisie de façon qu'à chaque groupe isocyanate du constituant (a) corresponde 0,1 à 0,95 groupe du constituant (b) pouvant réagir avec des groupes isocyanates, la préparation ayant lieu par mélangeage des constituants individuels puis, éventuellement avec formage ou moulage, on chauffe à au moins 60°C par apport de chaleur et/ou par utilisation de la chaleur de la réaction de formation de polyuréthanne qui se déroule immédiatement, et l'on conduit à son terme le durcissement avec trimérisation d'une partie des groupes isocyanates présents dans le mélange de départ.

7. Compositions à mouler, contenant un mélange de résines thermodurcissables, selon les revendications 1 à 5.
